Europäisches Patentamt

European Patent Office

Office européen des brevets

(11) Veröffentlichungsnummer: **0 518 081 A1**

## EUROPÄISCHE PATENTANMELDUNG

(21) Anmeldenummer: **92108320.0**

(22) Anmeldetag: **16.05.92**

(51) Int. Cl.5: **B65G  1/06**

(30) Priorität: **12.06.91 DE 9107229 U**

(43) Veröffentlichungstag der Anmeldung:
**16.12.92 Patentblatt  92/51**

(84) Benannte Vertragsstaaten:
**AT BE CH DE DK ES FR GB GR IT LI LU NL SE**

(71) Anmelder: **COPLA FÖRDER-UND LAGERTECHNIK GESELLSCHAFT FÜR ANLAGENBAU mbH**
**Dachsteinweg 6a**
**W-1000 Berlin 42(DE)**

(72) Erfinder: **Schröder, Niels**
**Neue Strasse 12**
**W-2080 Pinneberg(DE)**

(74) Vertreter: **Richter, Werdermann & Gerbaulet**
**Neuer Wall 10**
**W-2000 Hamburg 36(DE)**

(54) **Hochregallager zum Ein- und Auslagern von rollenförmigem Gut, insbesondere von Papierrollen, mit Schienen in paarweiser Anordnung zur Lagerung der Papierrollen.**

(57) Zur Lagerung von Papierrollen in Hochregallagern und zur Führung von Papierrollentransportfahrzeugen sind Schienen in paarweiser Anordnung vorgesehen, die zur Aufnahme von hohen Gewichten ein etwa U-förmiges Querschnittsprofil mit einem Untergurt, einem Obergurt (180) und einem beide Gurte verbindenden Steg aufweisen, der ungeknickt geradlinig verlaufend und über Verbindungen (183) mit einer Anzahl von in Abständen angeordneten und mit dem Querträger (12) der Rahmenkonstruktion des Lagers verbundenen senkrechten Tragholmen (184) verbunden ist, wobei der Untergurt von einem Schenkel (187) mit einem waagerecht verlaufenden, das Auflager für den Papierrollentransportwagen bildenden Abschnitt und einem sich an diesen anschließenden, senkrecht und parallel zu dem Steg verlaufenden Abschnitt gebildet ist, wobei sich der waagerechte Schenkelabschnitt auf und der senkrechte Schenkelabschnitt an einem mit dem senkrechten Tragholm (184) und dem Querträger (12) verbundenen Winkelprofil (188) mit einer gegenüber der Länge des senkrechten Schienenschenkelabschnittes größeren Höhe abstützt, wobei der Obergurt (180) von einem Schenkel gebildet ist, der in Richtung zum Auflager des Untergurts schräg verlaufend ist.

Fig. 8

Die Erfindung betrifft ein Hochregallager zum Ein- und Auslagern von rollenförmigem Gut, insbesondere von Papierrollen, die liegend von einer Rollenpackvorrichtung über eine Förderstrecke dem Hochregallager mit in Etagen vorgesehenen Regalfächern zuführbar sind, mit paarweise angeordneten Schienen zur Aufnahme von Papierrollentransportfahrzeugen, wobei jede Schiene des auf Querträgern der Rahmenkonstruktion des Lagers befestigten Schienenpaares ein etwa U-förmiges Querschnittsprofil mit einem Untergurt und einem Obergurt und mit einem den Untergurt mit dem Obergurt verbindenden Steg, aufweist.

Für das Lagern von Papierrollen sind zwei Lagertechniken bekannt, nämlich das Staplerlager und das Kranlager. Beim Staplerlager werden die Papierrollen nach der Verpackungs- oder Schneidmaschine ausgerichtet und vom Stapler mittels einer Klammervorrichtung aufgenommen. Mittels des Staplers wird dann die Papierrolle zum Lagerplatz befördert, auf dem meist mehrere Papierrollen turmartig aufeinander gestapelt werden. Bei dieser Art der Lagertechnik ist eine Beschädigungsgefahr der Papierrollen durch die eingesetzten Klammervorrichtungen nicht vermeidbar. Eine weitere Beschädigungsgefahr ist durch schräges Aufsetzen der Papierrollen gegeben, die in ihren Kantenbereichen beschädigt werden können. Das turmartige Aufeinanderstapeln mehrerer Papierrollen trägt zu einer Unfallgefahr bei. Beim Kranlager werden die Papierrollen ebenfalls nach der Verpackungs- oder Schneidmaschine ausgerichtet und mittels einer Krananlage mit Vakuumheber aufgenommen. Die Krananlage fährt die einzelnen Papierrollen zum Lagerplatz, auf dem ebenfalls die Papierrollen dann turmartig aufeinander gestapelt werden. Durch lagerbedingtes Kippen der Papierrollen ist eine erhöhte Beschädigungsgefahr ebenfalls gegeben.

Da eine Waggon- und LKW-Beladung mit Papierrollen immer in liegender Weise erfolgt, müssen die oben genannten herkömmlichen Lagersysteme immer ein Aufstellen und Umlegen der Papierrollen zur Erfüllung ihrer Funktionen umfassen.

Durch das DE-GM 88 13 290.0 ist eine Schiene zur Aufnahme von Papierrollen in paarweiser Anordnung in Lagern bekannt, wobei jede Schiene des Schienenpaares mit einem oberen Auflageprofilbereich zur Lagerung einer Papierrolle und mit einem darunter liegenden Profilbereich zur Bildung einer Lauffläche für Transportfahrzeuge ausgebildet ist. Dabei ist der obere Profilbereich querschnittlich etwa V-förmig ausgebildet; die Außenseiten eines jeden V-Schenkels bilden den Auflagebereich für die Papierrolle. Der V-Schenkel geht in einen in der Gebrauchslage senkrecht nach unten weisenden Montage- und Führungssteg über, an den sich der die Laufschiene für das Papierrollentransportfahrzeug bildende weitere Profilbereich anschließt, wobei das freie Ende des die Papierrollenauflager bildenden V-Schenkels nach innen in Richtung auf den Montagesteg zurückgefalzt ausgebildet ist; das freie Ende des die Laufschiene bildenden Profilbereiches ist dabei nach unten umgefalzt ausgebildet. Mit einer derart ausgebildeten Schiene in paarweiser Anordnung sollen schwere, im wesentlichen kreisförmige Objekte, wie große Papierrollen, mit unterschiedlichen Durchmessern gelagert werden können.

Des weiteren ist durch das DE-GM G 88 13 142.4 ein Kaltprofilträger mit einem Untergurt und einem Obergurt und mit einem Untergurt und Obergurt verbindenden geknickten Steg bekannt, der unter einem Winkel von 80° bis 100° an den Untergurt anschließt, in seinem Mittelbereich zu der Seite hin, auf der der Untergurt liegt, abgeknickt ist und im Knick der dem Untergurt benachbarte untere Teil des Steges mit dem oberen Teil des Steges einen stumpfen Winkel bildet, wobei der an den oberen Teil des Steges anschließende Obergurt dem Untergurt entgegengesetzt gerichtet, jedoch gegenüber einer der durch den Untergurt bestimmten Ebene gedachten parallelen Ebene schräg ansteigend ausgebildet ist und in seinem Anschlußbereich an den oberen Teil des Steges zu dieser parallelen Ebene in einem spitzen Winkel von 5° bis 50° steht, wobei am Obergurt eine Lippe und am Untergurt eine weitere Lippe angeformt sind. Dieser Kaltprofilträger ist so ausgebildet, daß sein Profil - im Querschnitt betrachtet - besonders geeignet ist, eine von der Senkrechten abweichende Auflast bei günstigen Spannungsverhältnissen im Kaltprofilträger aufzunehmen; des weiteren soll er mit wirtschaftlichem Materialaufwand sowohl kleinere wie auch größere Auflagelasten aufzunehmen vermögen.

Aufgrund des hohen Gewichts der Papierrollen von etwa 7 1/2 Tonnen ist ein Durchbiegen derart ausgebildeter Schienen oder Kaltprofilträger nicht vermeidbar, wobei bereits ein Durchbiegen der Profilstege als auch ein Durchbiegen in der Weise erfolgt, daß bei starker Gewichtsbelastung die Schienen, die ja paarweise zusammengefaßt sind, sich bei gleichzeitiger Durchbiegung ihrer Stege einander nähern, so daß eine Veränderung der Auflagefläche für die Papierrollen in der Weise eintreten kann, daß eine sichere Lagerung und Auflage der Papierrollen nicht mehr gewährleistet ist. Da die Schienen und Kaltprofilträger in ihren Untergurten als Auflager für die Papierrollentransportwagen ausgebildet sind, um mit diesen Transportwagen die Papierrollen in die einzelnen Regalflächen des Hochregallagers einfahren und ablegen zu können bzw. um die Papierrollen aufzunehmen und aus den Regalfächern herausfahren zu können, besteht bei einer Profilveränderung durch auf das Profil einwirkende Druckkräfte und der damit verbundenen Durchbiegung die Gefahr, daß die Auflager für die Transportwagen sich verformen und so verändern, daß die Fahrbewegungen der Transportwagen beeinträchtigt werden.

Der Erfindung liegt die Aufgabe zugrunde, ein Hochregallager zum Ein- und Auslagern, insbesondere von Papierrollen, zu schaffen, dem die in liegender Stellung angelieferten Papierrollen in liegender Stellung zugeführt, in liegender Stellung untergebracht und in liegender Stellung dem Hochregallager entnommen werden können, um so eine liegende Tranpsort- und Lagerweise zu ermöglichen, so daß die Papierrollen in schonendster Weise bewegt werden. Des weiteren ist es Aufgabe der vorliegenden Erfindung, eine Schiene für Hochregallager zu schaffen, die auch bei sehr hohen Gewichtsaufnahmen in ihrer Form unverändert bleibt und sich nicht verformt, so daß aufgrund der hohen Eigenstabilität der Schiene die Fahrbewegungen der Papierrollentransportwagen nicht beeinträchtigt werden, daß unabhängig von der Größe des Durchmessers der Papierrollen eine große Auflagefläche für die auf die Schienen abgesetzten Papierrollen auch bei einer hohen Gewichtsbelastung erhalten bleibt und daß das Fahrprofil für die Papierrollentransportwagen eine zusätzliche Versteifung erhält.

Diese Aufgabe wird durch die im Anspruch 1 angegebene Merkmalskombination gelöst.

Ein derart erfindungsgemäß ausgebildetes Hochregallager ermöglicht den Tranpsort und das Lagern von Papierrollen in liegender Stellung. Ein Aufrichten der Papierrollen, um diese in eine senkrechte Stellung zu bringen, wird vermieden und ist nicht mehr erforderlich. Die in liegender Stellung vermittels geeigneter Transportmittel zugeführten Papierrollen werden in liegender Stellung den einzelnen Regalfächern des Hochregallagers zugeführt und in liegender Stellung in den einzelnen Regalfächern gelagert, wobei auch das Entnehmen der Papierrollen und Abtransportieren der Papierrollen in liegender Stellung der Papierrollen erfolgt. Der Vorteil, der sich durch die Anwendung eines derart ausgebildeten Hochregallagers ergibt, liegt darin, daß die Papierrollen, die liegend von der Rollenpackmaschine über eine Fördertstrecke zum Lager gelangen, dort auch in liegender Weise aufgenommen werden, liegend innerhalb des Lagers durch die Lagerbediengeräte verfahren und ein- bzw. ausgelagert werden und ebenfalls in liegender Weise dem Lagerausgangsbereich übergeben werden. Diese liegende Transport- und Lagerweise hat den entscheidenden Vorteil, daß die Papierrollen in schonender Weise bewegt werden. Hinzu kommt, daß mit dem Hochregallager eine kompakte, raumsparende Lagerung von Papierrollen möglich ist; die Lagerbedienung automatisch durchgeführt wird und eine schonende Papierrollenbehandlung gegeben ist. Ein weiterer Vorteil besteht darin, daß das Ein- und Auslagern der Papierrollen ohne Hilfsmittel, wie Paletten od.dgl., erfolgt. Die Übernahme jeder einzelnen, ankommenden Papierrolle erfolgt liegend, und zwar so wie die Papierrolle aus der Verpackung kommt, wodurch kein Kippen und senkrechtes Aufstellen mehr erforderlich ist. Aufgrund der Regalfachausgestaltung des Hochregallagers können Papierrollen mit verschiedenen Durchmessern und Breiten hintereinander gelagert werden. Da die Ladeeinheiten bis 3100 mm mit einem Lastspiel eingelagert bzw. ausgelagert werden können, ist eine sehr hohe Leistung möglich. Durch Einsetzen z.B. von achtzehn Verschiebewagen mit je einem Papierrollentransportwagen sind problemlos 160 Einlagerungen bzw. 240 Auslagerungen von Papierrollen pro Stunde möglich. Anstelle der bekannten, über die gesamte Lagerhöhe reichende Regalförderer und Fahrzeuge sorgen kleine Verschiebewagen mit aufgesetzten Papierrollentransportwagen, die in jeder Lagerebene installiert und nur für Horizontalfahrt und Lastaufnahme bzw. -abgabe gebaut sind, für die Lagerbedienung. Der Einsatz einer größeren Anzahl von Fahrzeugen ermöglicht eine hohe Umschlagleistung. Ein- und Auslagerungsvorgänge können parallel durchgeführt werden. Als Lagerhilfsmittel kann eine in den Regalfächern bzw. Lagerkanälen eingebaute Profillagerkonstruktion dienen. Hinzu kommt, daß es sich bei dem durch das Hochregallager gegebene Lagerkonzept um ein sogenanntes "Chaotisches Lager" handelt, da Papierrollen mit jedem Rollendurchmesser und jeder Rollenbreite in jedes Regalfach bzw. Lagerkanal eingelagert werden können.

Eine für dieses Hochregallager eingesetzte Schiene, die in paarweiser Anordnung verwendet wird, weist eine hohe Festigkeit und Steifigkeit auf. Die Schiene ist in ihrer Ausgestaltung so ausgelegt, daß sie auch Lagergut aufnehmen kann, dessen Gewicht über dem Gewicht von Papierrollen liegt. Aus diesem Grunde eignet sich die Schiene auch zur Aufnahme hoher Gewichte, wie diese z.B. bei Rundeisen mit großen Durchmessern gegeben sind, so daß auch hochgewichtige Rundeisen in einem Lager abgelegt werden können, in dem die erfindungsgemäß ausgebildeten Schienen eingesetzt sind. Das Profil der Schiene biegt sich auch bei hoher Gewichtsbelastung nicht durch. Hinzu kommt eine hohe Versteifung des Fahrprofils bzw. des Auflagers für das Papierrollentransportfahrzeug. Außerdem nimmt das Schienenprofil die von den Papierrollen abgegebenen Linienlasten auf, ohne sich dabei zu verändern. Auch bei großen Schienenlängen treten bei Gewichtsbelastung keine Verwindungen auf. Dabei ist von besonderer Bedeutung die Befestigung des Schienenprofils im oberen Bereich des senkrechten Tragholmes, der bodenseitig an dem Querträger des Rahmengerüstes des Hochregallagers befestigt ist. Die Herstellung des Schienenprofils ist einfach und somit wirtschaftlich, da die Profilgebung der Stege des Obergurtes und des Untergurtes durch einfaches Abkanten erhalten werden kann.

Vorteilhafte Ausgestaltungen der Erfindung sind in den Unteransprüchen gekennzeichnet.

Ausführungsbeispiele der Erfindung werden nachstehend anhand der Zeichnung näher erläutert. Es zeigen

Fig. 1 in einer schaubildlichen schematischen Ansicht ein aus zwei Regalteilen bestehendes Hochregallager, wobei ein Regalteil nur abschnittsweise dargestellt ist,

Fig. 2 das aus zwei zu beiden Seiten eines Verteilerschachtes angeordneten Regalteilen bestehende Hochregallager nach Fig. 1 in einer Ansicht von oben,

Fig. 3 in einer schaubildlichen Ansicht ein aus nur einem Regalteil bestehendes Hochregallager,

Fig. 4 in einer vergrößerten Seitenansicht einen Verschiebewagen mit aufgesetztem, eine Papierrolle tragenden Papierrollentransportwagen ,

Fig. 5 in einer Vorderansicht den Verschiebewagen gemäß Fig. 4,

Fig. 6 ein Regalfach mit zwei eingelagerten Papierrollen in einer Ansicht von vorn,

Fig. 7 in einem senkrechten Schnitt eine Schiene zur Lagerung von Papierrollen und zur Aufnahme des Papierrollentransportwagens,

Fig. 8 die Schiene gemäß Fig. 7 in einer schaubildlichen Ansicht,

Fig. 9 eine Gesamtübersicht über das Hochregallager mit diesem vorgeschalteten Zulieferbahnen für die Papierrollen,

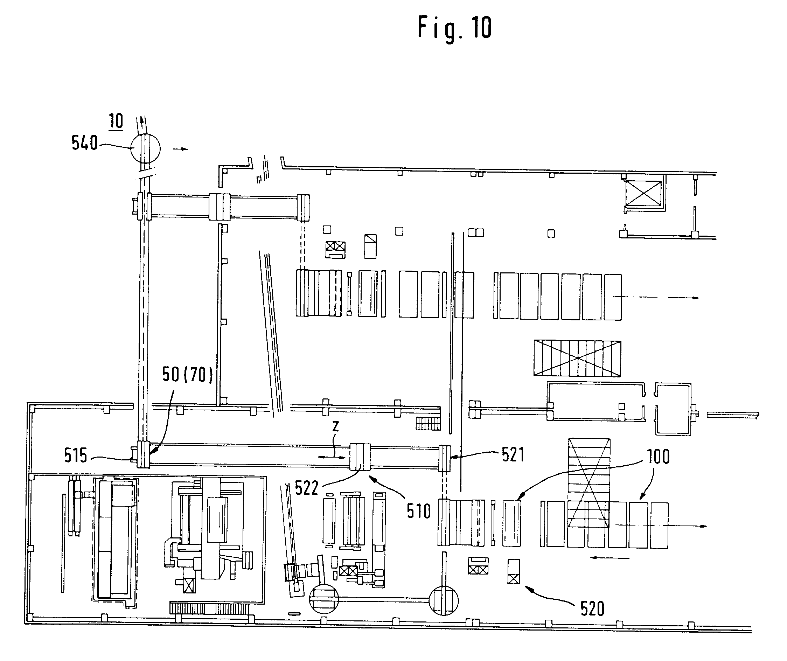

Fig.10 eine Gesamtübersicht über das Hochregallager mit Zulieferbahnen und Papierrollenschneidvorrichtungen,

Fig.11 in einer Seitenansicht eine Förderbrücke für die Zulieferung der Papierrollen zu dem Hochregallager und

Fig.12 einen senkrechten Schnitt gemäß Linie XII-XII in Fig. 11.

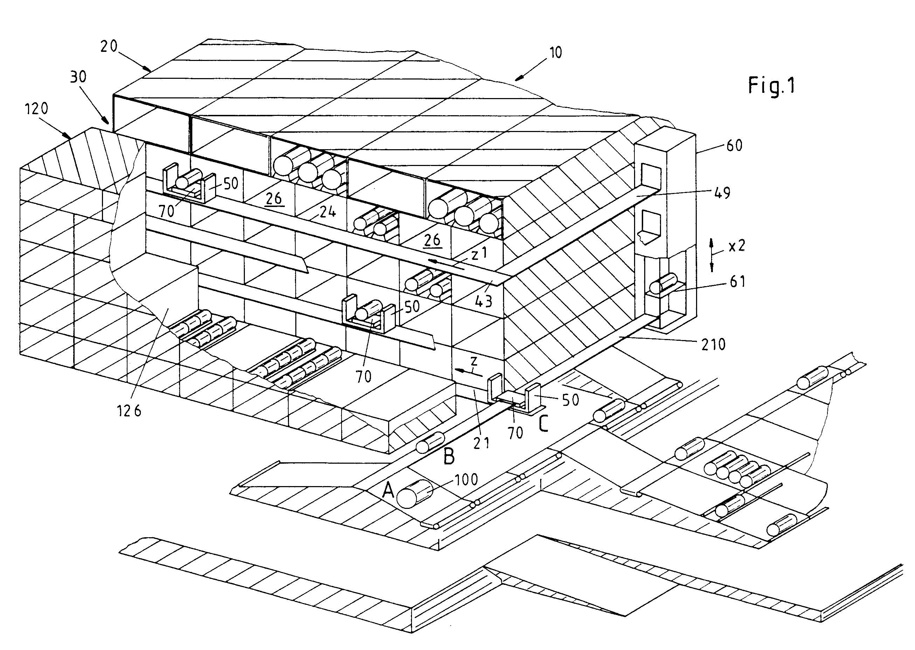

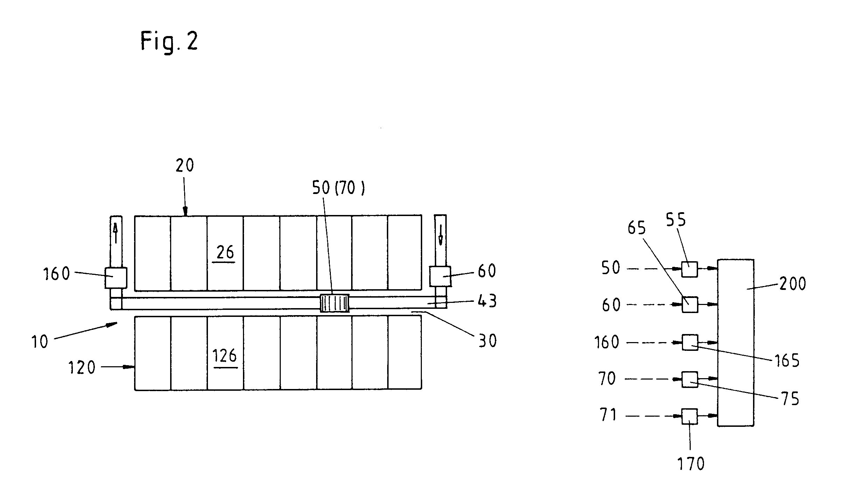

Das in Fig. 1 und 2 dargestellte und mit 10 bezeichnete Hochregallager zum Ein- und Auslagern von rollenförmigem Gut, insbesondere von Papierrollen 100 besteht aus zwei Regalteilen 20,120, die unter Ausbildung eines Verteilerschachtes 30 sich gegenüberliegend angeordnet sind, wobei die Breite des Verteilerschachtes 30 in etwa der Länge einer Papierrolle 100 entspricht.

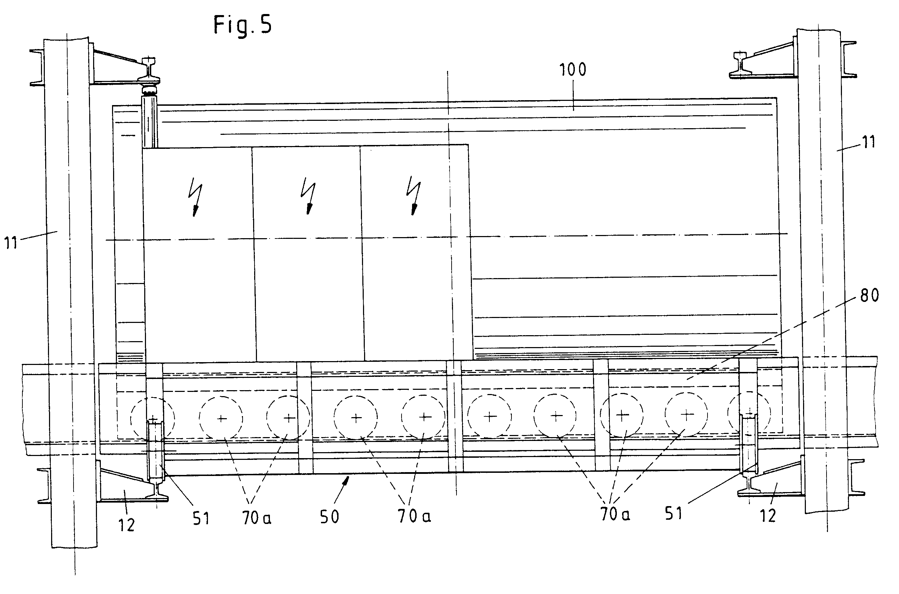

Jedes Regalteil 20,120 besteht aus senkrechten Regalpfosten 11, die über waagerechte Querträger 12 miteinander verbunden sind, so daß in den einzelnen Regalteilen 20,120 einzelne Etagen 21,22,23,24,25 ausgebildet werden. Bei dem in Fig. 1 und 2 gezeigten Ausführungsbeispiel weist jedes Regalteil 20,120 fünf Etagen auf, wobei sich die Anzahl der Etagen nach der jeweils gewünschten oder erforderlichen Lagerkapazität des Hochregallagers richtet (Fig.5). Da das Hochregallager 10 nach Art der Skelettbauweise aufgebaut ist, besteht die Möglichkeit, jedes Regalteil 20,120 seitlich oder in der Höhe zu vergrößern, falls die vorhandene Lagerkapazität nicht ausreicht und erweitert werden muß. Dabei können die einzelnen Regalteile 20,120 als Bauelemente vorgefertigt werden, um dann baukastenartig aneinander und/oder übereinander angeordnet werden zu können. Die das Hochregallager 10 bildende Rahmenkonstruktion ist vorzugsweise auf einer Grundplatte angeordnet.

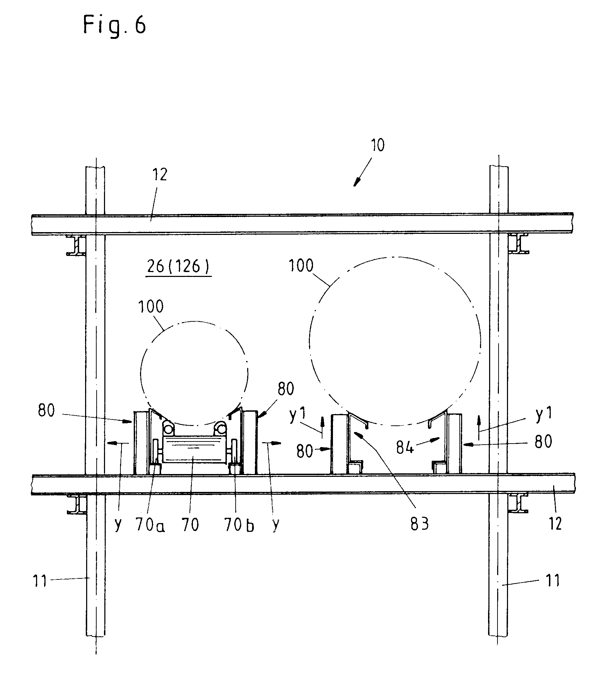

Die Etagen 21 bis 25 eines jeden Regalteils 20,120 sind nicht zueinander versetzt, sondern die Etagen der beiden Regalteile liegen in denselben Ebenen. Die senkrechten Regalpfosten 11 sind in Abständen voneinander angeordnet, so daß in jedem der beiden Regalteile 20,120 eine Vielzahl von neben- und übereinanderliegend angeordneten Regalfächern ausgebildet wird, die mit 26,126 bezeichnet sind. Die Abmessungen der einzelnen Regalfächer 26,126 , die mit ihren stirnseitigen Öffnungen 26a dem Verteilerschacht 30 zugeordnet sind, sind so gehalten, daß eine oder mehrere Papierrollen parallel zur Längsrichtung eines jeden Regalfaches 26,126 liegend sind. Die Höhe eines jeden Regalfaches 26,126 richtet sich nach dem Durchmesser der zu lagernden Papierrollen 100; die Höhe eines jeden Regalfaches 26,126 wird sich vorzugsweise nach dem größten Durchmesser der zu lagernden Papierrollen richten, so daß letztlich in jedem Regalfach auch Papierrollen mit unterschiedlichen Durchmessern gelagert werden können (Fig.6).

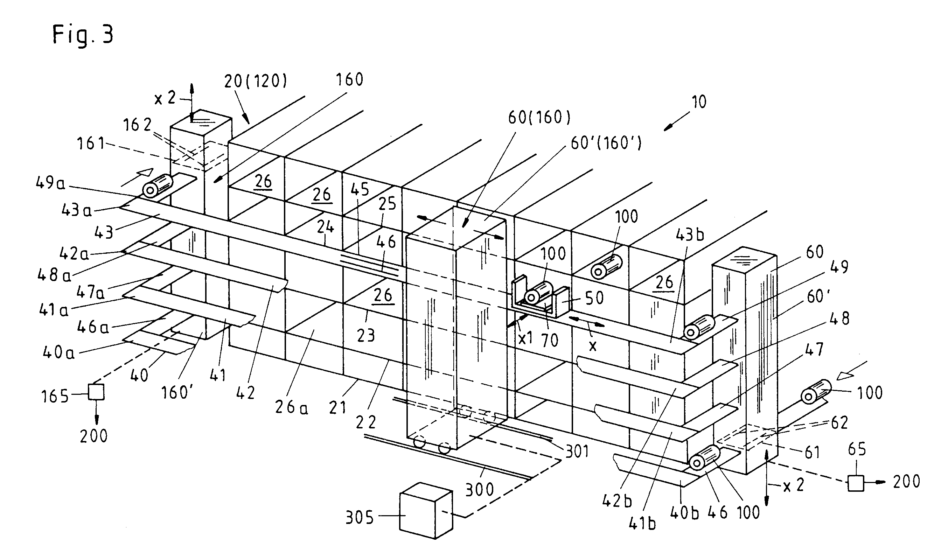

Nach dem in Fig. 1 und 2 gezeigten Ausführungsbeispiel besteht das Hochregallager 10 aus zwei zu beiden Seiten des Verteilerschachtes 30 angeordneten Regalteilen 20,120. Es besteht jedoch auch die Möglichkeit, ein Hochregallager 10 aus nur einem Regalteil 20 zu schaffen, wie dies aus Fig. 3 ersichtlich ist. Dieses nur aus einem Regalteil 20 bestehende Hochregallager 10 ist in Bezug auf sein Regalteil 20 entsprechend den Regalteilen 20,120 des in Fig. 1 und 2 dargestellten Hochregallagers 10 ausgebildet.

Die Länge eines jeden Regalfaches 26,126 der beiden Regalteile 20,120 des Hochregallagers 10 entspricht dem Mehrfachen der Länge einer Papierrolle 100, wobei jedoch auch eine Regalfachausgestaltung vorgesehen sein kann, nach der jedes Regalfach eine Länge aufweist, die der Länge einer Papierrolle 100 entspricht. Die zu beiden Seiten des Verteilerschachtes 30 angeordneten Regalteile 20,120 sind sich so gegenüberliegend angeordnet, daß die stirnseitigen Öffnungen 26a der einzelnen Regalfächer 26,126 des einen Regalteils 20 mit denen des anderen Regalteils 120 korrespondieren.

In jeder Etage 21,22,23,24,25 eines jeden Regalteils 20,120 ist im Bereich der stirnseitigen Öffnungen 26a eines jeden Regalfaches 26,126 eine waagerecht und quer zur Regalfach-Längsrichtung verlaufende Transportbahn für mindestens einen Verschiebewagen 50 angeordnet. Bei dem in Fig. 3 gezeigten Ausführungsbeispiel sind den Etagen 21,22,23,24 je eine Transportbahn 40,41,42,43 zugeordnet. Die für die Etage 25 erforderliche Transportbahn ist in der Zeichnung nicht dargestellt. Die Anzahl der Transportbahnen für diese Verschiebewagen 50 richtet sich nach der Anzahl der einzelnen Etagen. Besteht das Hochregallager 10 nur aus einem Regalteil 20 bzw. 120, dann sind die Transportbahnen 40 bis 43 im Bereich der stirnseitigen Öffnungen 26a der einzelnen Regalfächer 26 bzw. 126 verlaufend angeordnet. Besteht dagegen das Hochregallager 10 aus den beiden Regalteilen 20,120 , dann sind die Transportbahnen 40 bis 43 in dem zwischen den beiden Regalteilen 20,120 ausgebildeten Verteilerschacht 30 angeordnet. Da im Bereich des Verteilerschachtes 30 keine senkrechten Verschiebebewegungen durchgeführt werden, sind die Transportbahnen 40 bis 43 fest mit der Rahmenkonstruktion des Hochregallagers 10 verbunden.

Jede Transportbahn 40,41,42,43 ist mit parallel zueinander geführten Laufschienen 45,46 für die Führung der Verschiebewagen 50 versehen (Fig.3).

Die Transportbahnen 40 bis 43 münden bei der in Fig. 3 gezeigten Ausführungsform mit ihren beiden Enden 40a,41a, 42a,43a und 40b,41b,42b,43b in Aufzüge 60,160, von denen jeder Aufzug aus einem Aufzugsschacht 60',160' aus einer Rahmenkonstruktion mit einer heb- und senkbaren Transportplattform 61,161 besteht,wobei jede Transportplattform 61,161 so ausgebildet ist, daß diese mindestens einen Verschiebewagen 50 aufnehmen kann. Hierzu ist jede Transportplattform 61,161 ebenfalls mit einem Paar Laufschienen 62,161 zur Aufnahme der Verschiebewagen 50 versehen , wobei jedoch die Laufschienen 62,162 einer jeden Transportplattform 61,161 mit den Laufschienen 45,46 einer jeden Transportbahn 40,41,42,43 so in Verbindung bringbar sind, daß die Verschiebewagen 50 von den Transportbahnen auf die Transportplattform 61,161 der Aufzüge 60,160 verfahren werden können, wenn die Transportplattform in den Bereich der einzelnen Transportbahnen 40 bis 43 verfahren ist, so daß ein stufenloser Verschiebewagenüberfahrbereich erhalten wird. Jede Transportplattform 61,161 kann jedoch eine Länge aufweisen, die dem Mehrfachen der Länge eines Verschiebewagens 50 entspricht, so daß z.B. jede Transportplattform 61,161 zwei oder mehrere Verschiebewagen 50 hintereinanderstehend aufnehmen kann, um die Verschiebewagen 50 den Transportbahnen 40 bis 43 der einzelnen Regallageretagen 21 bis 25 zuführen zu können. Die Zuführung der Papierrollen 100 zu den Aufzügen 60,160 erfolgt über Transportbänder 210 (Fig.1).

Die beiden Aufzüge 60,160 sind entsprechend Fig. 3 an der Stirnseite des Regalteils 20 angeordnet. Besteht das Hochregallager 10 aus zwei Regalteilen 20,120 dann besteht die Möglichkeit, die Aufzüge 60,160 an den Enden des Verteilerschachtes 30 anzuordnen, wobei jedoch auch andere Standortspositionen für die Aufzüge 60,160 gewählt werden können. Sind die Aufzüge 60,160 an den Stirnseiten des Regalteils 20 angeordnet (Fig.1), dann sind die Transportbahnen 40 bis 43 bis in die Stirnseiten des Regalteils 20 verlängert und münden in die an den Stirnseiten des Regalteils 20 angeordneten Aufzüge 60,160. Dabei kann eine Ausgestaltung dieser Transportbahnen 40 bis 43 derart erfolgen, daß die Verschiebewagen 50 auch von den Transportplattformen 61,161 der beiden Aufzüge 60,160 aufgenommen werden können. Nach einer weiteren Ausführungsform dienen jedoch die im Bereich der stirnseitigen Öffnungen 26a der Regalfächer 26,126 der Regalteile 20,120 verlaufenden Transportbahnen 40 bis 43 für das Verfahren der Verschiebewagen 50, wohingegen dann diejenigen Transportbahnenabschnitte, die im Bereich der Stirnseiten des Regalteils 20 verlaufen, als Transportbahn für Papierrollentransportwagen 70 dienen, die auf den einzelnen Verschiebewagen 50 anordbar sind, worauf nachstehend noch näher eingegangen wird. Die im Bereich der Stirnseiten des Regalteils 20 verlaufenden Transportbahnabschnitte sind in Fig. 1 mit 46,47,48,49 und 46a,47a,48a,49a bezeichnet (Fig.3).

Das senkrechte Verfahren der Transportplattformen 61,161 der beiden Aufzüge 60,160 erfolgt vorzugsweise mittels elektromotorisch betriebener Antriebseinrichtungen, die bei 65,165 angedeutet sind. Die Verfahrrichtung der beiden Transportplattformen 61,161 erfolgt in Richtung der Pfeile X2 (Fig.3). Es besteht jedoch auch die Möglichkeit, anstelle von zwei stirnseitig an dem Regalteil 20 angeordneten Aufzügen 60,160 einen einzigen Aufzug vorzusehen, in den dann ebenfalls die Transportbahnen 40 bis 43 mit oder ohne ihren Transportabschnitten 46 bis 49 und 46a bis 49a münden.

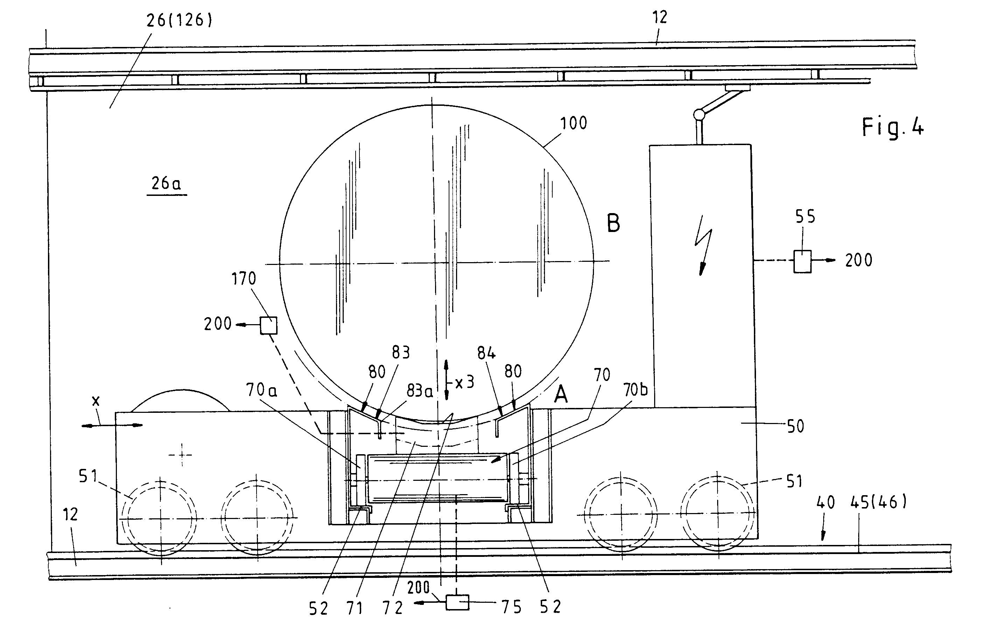

Jeder Verschiebewagen 50 ist mit einem quer zur Verschiebewagenvorschubbewegung verlaufenden Papierrollentransportwagen 70 versehen , der huckepackartig auf dem Verschiebewagen 50 angeordnet ist (Fig.4). Um eine möglichst niedrige Bauhöhe zu erhalten, ist der Verschiebewagen 50 mittig mit einer Ausnehmung versehen, in der der Papierrollentransportwagen 70 zu stehen kommt. Im Bereich des Standortes des Papierrollentransportwagens 70 weist der Verschiebewagen 50 ein Paar Laufschienen 52 auf, auf denen sich der Papierrollentransportwagen 70 mit seinen Laufrollen 70a,70b abstützt und so geführt ist, daß ein Verfahren des Papierrollentransportwagens 70 in Pfeilrichtung X1 möglich ist (Fig.3 und 5). Der Verschiebewagen 50 selbst ist mit Laufrollen 51 versehen, um auf den Laufschienen der Transportbahnen 40 bis 43 verfahren zu können.

Der Papierrollentransportwagen 70 ist mit einer heb- und senkbaren Papierrollentragplatte 71 versehen. Die Hubbewegung dieser Papierrollentragplatte 71 erfolgt in Pfeilrichtung X1 (Fig.4). Die Antriebseinrichtung für die Papierrollentragplatte 71 , um diese in der Höhe verfahren zu können, ist in dem Gehäuse des Papierrollentransportwagens 70 untergebracht und mit 170 bezeichnet. Neben einem elektromotorischen Antrieb kann auch eine hydraulische Hubeinrichtung eingesetzt werden. Die Antriebseinrichtung für den Verschiebewagen 50 ist bei 55 und für den Papierrollentransportwagen 70 bei 75 angedeutet. Alle Antriebseinrichtungen 55,65,165,75 und 170 sind in einem Programmsteuerwerk 200 zusammengefaßt, in das auch die einzelnen Regalfächer 26,126 mit eingespeichert sind, worauf nachstehend noch näher eingegangen wird (Fig.2).

Die Papierrollentragplatte 71 des Papierrollentransportwagens 70 weist eine Auflagefläche 72 für die einzelnen Papierrollen 100 auf, die teilkreisbogenförmig ausgebildet ist, d.h. so ausgebildet ist, daß sich die Papierrollenauflagefläche 72 den Umfang der Papierrolle 100 anpaßt, so daß diese sicher in der von der Papierrollenauflagefläche 72 gebildeten Mulde gehalten ist (Fig.4).

Jedes Regalfach 26,126 ist mit einem in Regalfachlängsrichtung verlaufenden Papierrollenträger 80 versehen, der feststehend in der Rahmenkonstruktion des Hochregallagers angeordnet ist. Dieser Papierrollenträger 80 ist mit zu seinen beiden Seiten angeordneten Laufbahnen 82, 82' für den Papierrollentransportwagen 70 versehen. Diese beiden Laufbahnen 82,82' können zu beiden Seiten des Papierrollenträgers 80, jedoch auch in die konstruktive Ausgestaltung des Papierrollenträgers 80 mit einbezogen werden, wie dies in den Fig. 4 und 6 dargestellt ist.

Der Papierrollenträger 80 besteht aus zwei im Abstand voneinander angeordneten Schienen 83,84 deren Abstützflächen 83a,84a für die Papierrolle 100 zueinander geneigt verlaufend ausgebildet sind, so daß eine Lagerfläche erhalten wird, die in etwa dem Verlauf eines Abschnittes des Umfanges einer Papierrolle entspricht, so daß von den beiden Abstützflächen 83a,84a eine schalen- bzw. muldenförmige Lagerfläche für die Papierrolle 100 geschaffen wird, die dann Lagegesichert auf dem Papierrollenträger 80 gehalten wird.

Des weiteren sind die beiden Schienen 83,84 des Papierrollenträgers 80 in einem Abstand voneinander angeordnet, wobei dieser Abstand derart bemessen ist, daß die Papierrollentragplatte 71 zwischen den Schienen 83,84 hindurchgeführt werden

kann, wenn der Papierrollentransportwagen 70 mit angehobener Papierrollentragplatte 71 durch den Papierrollenträger 80 hindurchgeführt wird (Fig.4 und 5). Die Transportstellung der Papierrolle 100 bei angehobener Papierrollentragplatte 71 des Papierrollentransportwagens 70 ist in Fig. 4 bei B angedeutet, während die Aufsitzstellung der Papierrolle auf dem Papierrollenträger 80 in einem Regalfach bei A angedeutet ist.

Vermittels des Verschiebewagens 50 mit aufgesetztem Papierrollentransportwagen 70 wird die einzelne Papierrolle 100 auf der Transportbahn der jeweiligen Etage in den Bereich der stirnseitigen Öffnung 26a desjenigen Regalfaches 26 bzw. 126 des Regalteils 20 bzw. 120 verfahren, in das die Papierrolle abgelegt werden soll. Hat der Verschiebewagen 50 die in Fig. 4 gezeigte Position eingenommen, dann verfährt der Papierrollentransportwagen 70 mit der Papierrolle 100 in das Regalfach, wobei die Papierrolle mit der Papierrollentragplatte 71 angehoben ist, damit die Papierrolle oberhalb des in dem Regalfach angeordneten Papierrollenträgers 80 bis zu seiner Ablagestellung in das Regalfach verfahren werden kann. Hat der Papierrollentransportwagen 70 die für die Papierrolle vorgesehene Ablageposition eingenommen, dann wird der Papierrollenträger 80 abgesenkt, und zwar soweit, bis die Papierrolle auf den .
Schienen 83,84 des Papierrollenträgers 80 aufsitzt. Der Papierrollentransportwagen 70 wird dann mit eingefahrener Papierrollentragplatte 71 in den Bereich der stirnseitigen Öffnung des betreffenden Regalfaches verfahren und an den zwischenzeitlich bereitgestellten Verschiebewagen 50 übergeben, der dann somit zur Übernahme und Aufnahme einer erneuten Papierrolle zur Verfügung steht.

Die Papierrollenträger 80 in den einzelnen Regalfächern 26,126 können sich über die gesamte Länge der Regalfächer erstrecken. Es besteht jedoch auch die Möglichkeit, bei sehr lang bemessenen Regalfächern kürzere Abschnitte des Papierrollenträgers 80 unter Beibehaltung von Abständen hintereinanderliegend in Reihe anzuordnen, und zwar derart, daß ausreichende Lager- und Abstützflächen für die Papierrollen erhalten werden. Es besteht jedoch auch die Möglichkeit, in jedem einzelnen Regalfach 26,126 nur einen Papierrollenträger 80 oder mehrere Papierrollenträger 80 nebeneinanderliegend anzuordnen. Bei dem in Fig. 5 gezeigten Ausführungsbeispiel sind in dem Regalfach zwei Papierrollenträger 80 angeordnet. Bei diesem Ausführungsbeispiel sind die Papierrollenträger 80 unterschiedlich bemessen ausgebildet, um Papierrollen mit unterschiedlichem Durchmesser aufnehmen zu können.

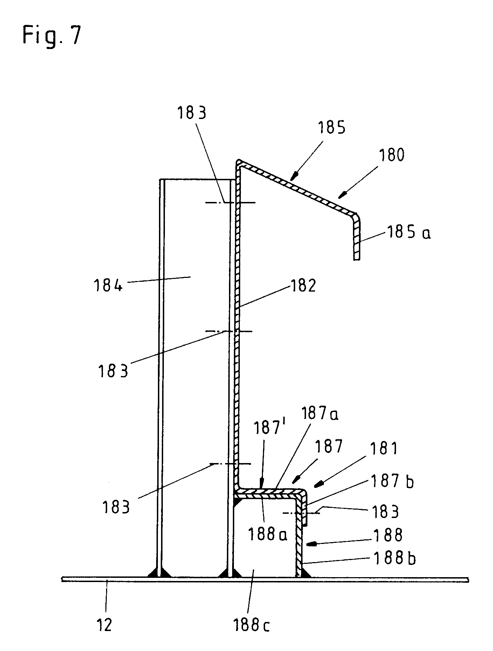

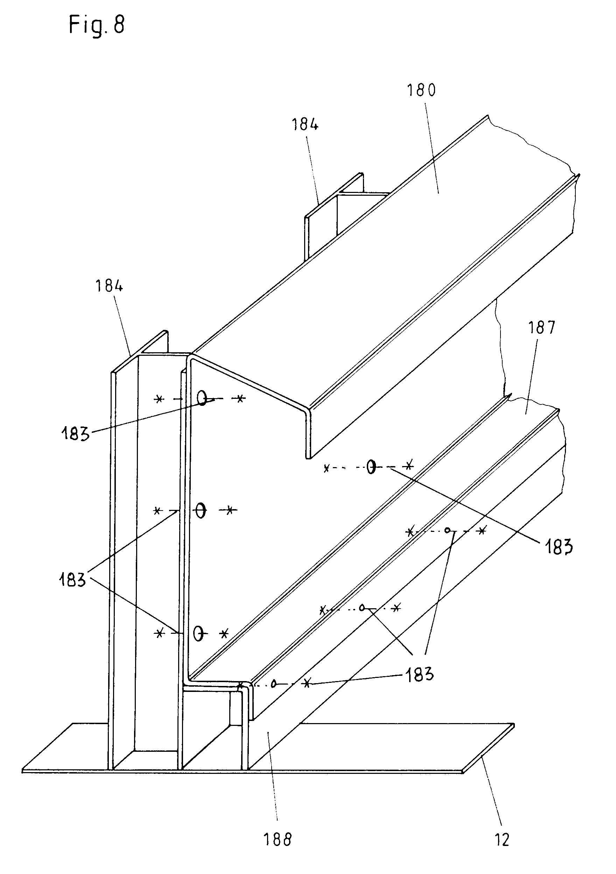

Jede Schiene 83,84 besteht als Papierrollenträger und als Fahrauflager für den Transportwagen 70 aus einem Obergurt 180, einem Untergurt 181 und einem senkrechten Steg 182, der den Obergurt 180 mit dem Untergurt 181 verbindet. Der Steg 182 ist ungeknickt und geradlinig verlaufend; er ist über Schraub-, Niet- oder Schweißverbindungen 183 mit einer Anzahl von in Abständen voneinander angeordneten und mit dem Querträger 12 verbundenen senkrechten Tragholmen 184 verbunden. Jeder Tragholm 184 ist als Doppel-T-Profilträger ausgebildet und mit seinen Flanschen 184a,184b an dem Steg 182 befestigt. Wesentlich ist dabei, daß die Befestigung des Steges 182 der Schiene 83,84 im oberen Bereich des Tragholmes 184 erfolgt. Dieser Befestigungspunkt ist von wesentlicher Bedeutung insofern, als über diesen ein Abbiegen oder Abknicken des Steges 182 mit seinem oberen, abgewinkelten, das Auflager für die Papierrolle bildenden Schenkel 185, worauf nachstehend noch näher eingegangen wird, vermieden wird (Fig. 7 und 8).

Der Untergurt 181 der Schiene 83,84 wird von einem Schenkel 187 mit einem das Auflager 187' für den Papierrollentransportwagen 70 bildenden, waagerecht verlaufenden Abschnitt 187a und einem sich an diesen anschließenden, senkrecht und parallel zu dem Steg 182 verlaufenden Abschnitt 187b gebildet, wobei sich der waagerechte Schenkelabschnitt 187a auf einem Winkelprofil 188 abstützt, während der senkrechte Schenkelabschnitt 187b sich ebenfalls an dem Winkelprofil 188 abstützt, der mit seinem oberen waagerechten Schenkel 188a an dem Tragholm 184 und mit seinem senkrechten Schenkel 184b an dem Querträger 12 befestigt ist (Fig.7). Dabei liegt der Schenkelabschnsitt 187a auf dem Winkelprofilschenkel 188a auf, während der Schenkelabschnitt 187b an dem Winkelprofilschenkel 188b anliegt. Der Untergurt 181 liegt fest und kraftschlüssig an dem Winkelprofil 188 an. Die Länge des Winkelprofils 188 kann der Länge der Schiene 83,84 entsprechen; es besteht jedoch auch die Möglichkeit, das Winkelprofil 188 abschnittsweise anzuordnen. Es ist vorteilhaft, wenn die beiden Winkelprofilschenkel 188a,188b über einen senkrechten Versteifungssteg 188c verbunden und versteift sind, was zur Erhöhung der Steifigkeit des winkelprofils beiträgt.

Die Höhe des Winkelprofils 188 ist bevorzugterweise gegenüber der Länge des senkrechten Schenkelabschnittes 187b der Schienne 83,84 größer.

Der Obergurt 180 ist von einem Schenket 186 gebildet, der in Richtung zum Auflager 187' des Untergurts 181 schräg verlaufend ist und an den sich ein senkrecht und parallel zu dem Steg 182

der Schiene 83,84 verlaufender Abschnitt 185a anschließt,wobei der senkrechte Tragholm 184 eine Länge aufweist, die der Länge aus der Summe der Länge des Steges 182 und des Winkelprofils 188 entspricht oder gegenüber der Gesamtlänge vom Steg 182 und dem Winkelprofil 188 eine kleinere Länge aufweist.

Der Schenkel 185 des Obergurtes 180 weist zu dem Steg 182 bevorzugterweise eine Winkelstellung von 65° auf.

Die beiden Schienen 83,84 sind gleich ausgebildet und sind sich so gegenüberliegend auf dem Querträger 12 angeordnet, wie dies in den Fig. 4 und 6 gezeigt ist. Das Auflager 187' zusammen mit dem Schenkelabschnitt 187b der Schiene 83,84 bildet das Fahrprofil, d.g. die Laufbahn für den Papierrollentransportwagen.

Sowohl der Verschiebewagen 50 als auch das Papierrollentransportwagen 70 sind mit einem elektromotorisch betriebenen Fahrmotor versehen; jedoch auch andersartig ausgebildete Antriebseinrichtungen können zur Anwendung gelangen.

Das Hochregallager 10 kommt wie folgt zur Anwendung: Soll in dem freien Regalfach 26 in der Etage 24 des Regalteils 20 des Hochregallagers 10 eine Papierrolle 100 gelagert werden, so wird diese Papierrolle gemäß Fig.1 über ein vorgeschaltetes System von Transportbändern u.dgl. von der Position A dem Transportbahn 210 zugeführt. In der Position C steht im Bereich der Transportbahn 210 ein Verschiebewagen 50 mit aufgesetztem Papierrollentransportwagen 70 bereit , und zwar derart, daß die Papierrolle von der Position B direkt der Papierrollentragplatte 71 des Papierrollentransportwagens 70 zugeführt werden kann. Vorzugsweise nimmt dabei die Papierrollentragplatte 71 des Papierrollentragwagens 70 ihre niedrigste Stellung ein, damit eine einwandfreie Übernahme der Papierrolle gewährleistet ist. Soll diese Papierrolle auf dem Papierrollentransportwagen 70 einem Regalfach in der Etage 21 zugeführt werden, dann verfährt der Verschiebewagen 50 in Pfeilrichtung Z auf der untersten Transportbahn 40 bis in den Bereich des Regalfaches 26, in dem die Papierrotte abgelegt werden soll. Da aber bei dem hier aufgezeigten Beispiel die Papierrolle 100 in das Regalfach 26 der Etage 24 zugeführt werden soll, wird die Papierrolle auf dem Papierrollentransportwagen 70 liegend zusammen mit diesem der Transportplattform 61 des Aufzuges 60 zugeführt und vermittels des Aufzuges bis zur Etage 24 transportiert und dann auf dem Transportbahnabschnitt 49 zur Transportbahn 43 bewegt, auf der ein Verschiebewagen 50 zur Übernahme des Papierrollentransportwagens 70 zur Verfügung steht Nach Übernahme des Papierrollentransportwagens 70 wird der Verschiebewagen 50 in Pfeilrichtung Z1 auf der Transportbahn 43 verschoben, und zwar bis in den Bereich der stirnseitigen Öffnung 26a desjenigen Regalfaches 26, in das die Papierrolle 100 abgelegt werden soll. Der Verschiebewagen 50 hat dann im Bereich dieses Regalfaches seine Endfahrposition erreicht und verweilt dort solange, bis der Papierrollentransportwagen 70 in das Regalfach verfahren ist. Für das Verfahren des Papierrollentransportwagens 70 in das Regalfach wird die Papierrollentragplatte 71 mit der auf dieser angeordneten Papierrolle angehoben, woraufhin dann der Papierrollentransportwagen 70 in das Regalfach hineingleitet und bis zum Erreichen derjenigen Position vorbewegt wird, in der die Papierrolle auf dem Papierrollenträger 80 abgesetzt wird. Die Papierrollentragplatte 71 des Papierrollentransportwagens 70 wird dann abgesenkt, wobei gleichzeitig die Papierrolle auf den beiden Papierrollentragschienen abgesetzt wird Mit eingefahrener Papierrollentragplatte 71 wird dann der Papierrollentransportwagen 70 in den Ausgangsbereich dieses Regalfaches bewegt und wird von einem bereitgestellten Verschiebewagen aufgenommen und wieder in die unterste Beladeposition verfahren, um eine erneute Papierrolle aufnehmen zu können. In gleicher Weise wie das Beschicken der einzelnen Regalfächer erfolgt, erfolgt auch das Auslagern der Papierrollen aus dem Hochregallager.

Der Transport der Papierrollen 100 kann nach Übernahme von den Papierrollentransportwagen 70 bis in den Bereich der Transportbahnen 40 bis 43 ohne Verschiebewagen 50 erfolgen. Erst wenn die Papierrollentransportwagen 70 mit den Papierrollen 100 die Transportbahnen 40 bis 43 erreicht haben, erfolgt eine Übernahme der Papierrollentransportwagen 70 durch die Verschiebewagen 50, von denen aus dann die Papierrollentransportwagen 70 in die einzelnen Regalfächer 26,126 verfahren werden. Um die Papierrollen ablegen zu können, besteht jedoch auch die Möglichkeit, von der Papierrollenaufgabestation die auf den Papierrollentransportwagen 70 angeordneten Papierrollen zusammen mit den Verteilerwagen 50 bis in den Bereich der Regalfächer zu verfahren.

Der den Regalteilen 20,120 zugeordnete Aufzugsschacht 60', 160' ist an dem einen Ende der Transportbahnen 40 bis 43 feststehend angeordnet. Um dem Verteilerschacht 30 eine möglichst geringe Breite geben zu können, ist der Aufzugsschacht 60',160' seitlich vor dem Verteilerschacht angeordnet, wobei die vor den Regalteilen 20,120 verlaufenden Transportbände 40 bis 43 über quer zu diesen verlaufende Transportbänder 46 bis 49 in den Aufzugsschacht 60',160' geführt sind. Es besteht jedoch auch die Möglichkeit, den Aufzugsschacht 60',160' im oder vor dem Verteilerschacht 30 anzuordnen, wobei der Aufzugsschacht 60',160' feststehend oder verfahrbar ausgebildet sein kann. Im letzteren Fall kann das Verfahren in dem Verteilerschacht 30 zwischen den beiden sich gegenüberliegenden Regalteilen 20,120 in Regallängsrichtung auf Laufschienen 300,301 vermittels bei 305 angedeuteter elektromotorischer Antriebseinrichtungen erfolgen (Fig.3). Auch ist es möglich, den Aufzugsschacht 60',160' selbstfahrend auszubilden, so daß auch ein Verfahren aus dem Regalbereich möglich ist. Bei denjenigen Ausführungsformen, bei denen der Aufzugsschacht 60',160' in dem Verteilerschacht 30 in Regallängsrichtung verfahrbar ist, sind in dem Verteilerschacht 30 keine Transportbänder 40 bis 43 vorgesehen, damit der Aufzugsschacht 60',160' frei verfahren werden kann.

Der Vorteil bei der Verwendung eines in dem Verteilerschacht 30 verfahrbar angeordneten Aufzugsschachtes 60', 160', der eine der Höhe der Regalteile 20,120 entsprechende Höhe aufweist, liegt in einem schonenden Papierrollentransport. Bei der Verwendung von Stetigförderern in Form von Transportbändern 40 bis 43 vor den beiden Regalteilen muß, wenn Transportgut bewegt wird, immer das gesamte Band eingeschaltet werden. Hinzu kommt das mehrfache Übergeben der Papierrollen und eine mögliche oder sogar erforderliche Zwischenlagerung. Diese entfällt. Die Papierrollen werden einmal aufgelegt und am Ziel abgelegt.

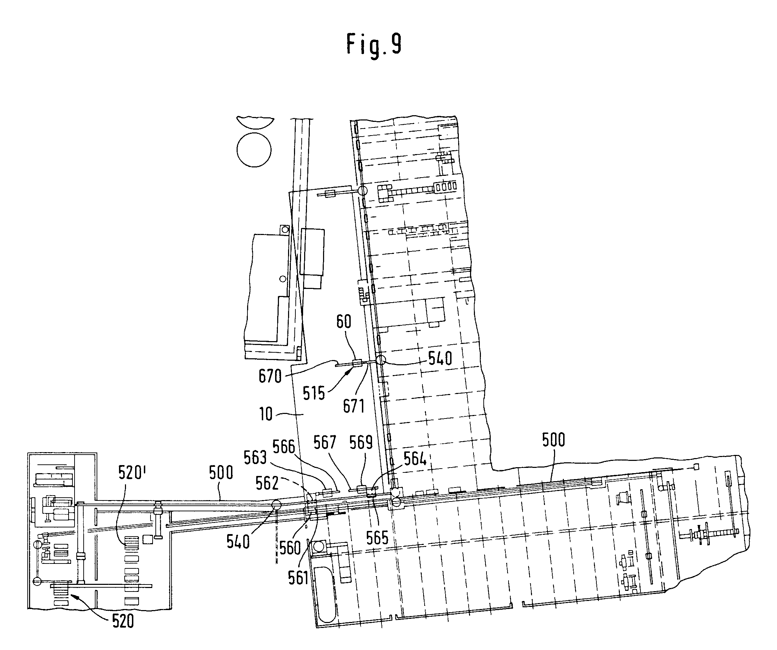

Fig. 9 zeigt eine Gesamtübersicht einer Anlage, die ein Hochregallager 10 mit Zuführbahnen 500 für die Papierrollen 100 umfaßt. Dabei ist zu berücksichtigen, daß der Papierrollenanfall im ungünstigsten Fall als Einzelrolle zum Einlagern in das Hochregallager 10 transportiert werden muß. Gehen die Rollen zum Versand, so können die Rollen zu Transporteinheiten zusammengefaßt werden, die eine Packlänge von 3,2 m nicht überschreiten sollten.

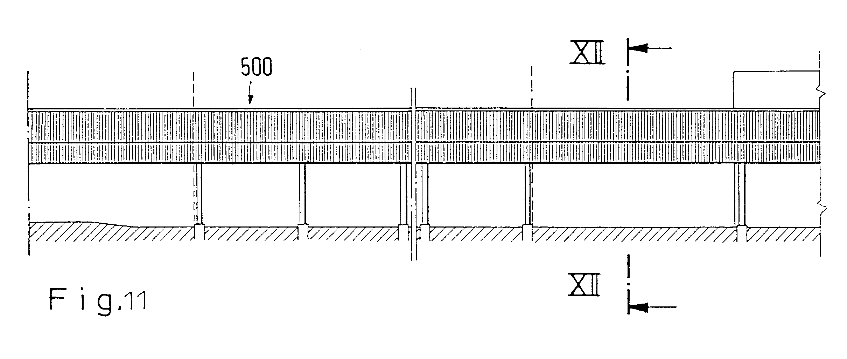

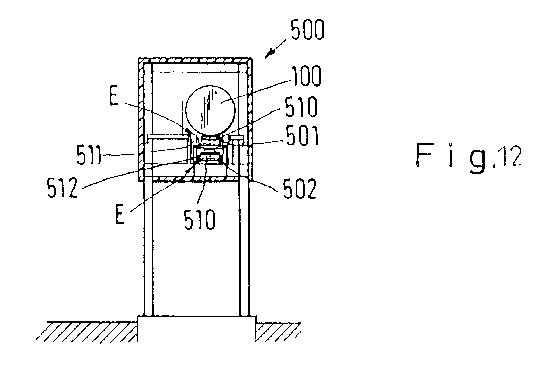

Den Transport der Papierrollen von der Papierfabrik zum Hochregallager 10 übernehmen unabhängig voneinander fahrende Papierrollentransportwagen 510. Dies sind Transportwagen mit eigenem Antrieb und Steuerung, die in doppelstückigen Fahrschienen 501,502 fahren (Fig. 11 und 12). In der unteren Ebene E1 fahren die Transportfahrzeuge als Leerfahrzeug auf dem Rückweg und in der oberen Ebene E2 als betadenes Fahrzeug. Nach dem Entladen des Transportfahrzeuges wird dieses an einer materialflußtechnisch günstigen Stelle über eine Hubstation von der oberen in die untere Ebene umgesetzt und kann dann gegenläufig zurückfahren. Hierdurch ist sichergestellt, daß die Transportwagen 510 im ständigen Kreisverkehr nach Quelle-Zielfunktion und der jeweiligen Frequenz im Einsatz sind. Die Zuführbahnen für die Papierrollen sind vorzugsweise als Förderbrücken ausgebildet (Fig.11).

Überbrückungen von Höhen erfolgen über Vertikalförderer 515, so daß die Papierrollen nach dem Aufgeben auf die Transportwagen erst wieder im Hochregallager bewegt werden.

Die gesamte Förderstrecke wird z.B. von dreizehn Transportwagen 510 versorgt, wobei davon ausgegangen wird, daß Rollen, die für das Hochregallager bestimmt sind, als Einzelrolle gefahren werden. Transportwagen, die das Hochregallager beschicken, werden direkt bei den Einlagerungspunkten umgesetzt, um schnell wieder für eine Rollenaufnahme bereit zu sein.

Sollten die Rollen zum Versand bestimmt sein, so wird mit der maximalen Ladeeinheit, die auf einen Transportwagen paßt, gefahren.

Da parallel hierzu noch die Querschneidervorrichtungen 520 mit Papierrollen versorgt werden müssen, werden noch weitere Transportwagen benötigt. Der Rollentransport im Einlager- und Auslagerbereich erfolgt ebenfalls durch im Vertikalförderer stationär angeordnete Transportwagen. Das Ein- und Auslagern der Papierrollen im Hochregallager erfolgt per Verfahrenwagen und Satellit, die mit einer eigenen Steuerung ausgerüstet sind.

Die Gesamtanlage wird wie folgt verwendet: Die aus der Rollenschneidvorrichtung 520 kommenden Rollen werden über die Rollenablagestation 521 auf einen Taktschlitten übergeben. Die Rollen werden durch zwei, unabhängig voneinander wirkenden, fahrbaren Hubbalken getrennt. Jeder Hubbalken ist mit einer Rollenhaltevorrichtung ausgerüstet, um die zu trennenden Rollen gegen Verrutschen zu sichern. Hierdurch können Einzelrollen getaktet, signiert und ausgestoßen werden oder vereinzelt signiert und wieder zu Ladeeinheiten von max. 3,2 m zusammengestellt werden. Bei Einzelrollen wird an der vorderen Stirnseite (in Förderrichtung) gestempelt. Bei aufzutaktenden Ladeeinheiten wird je eine Rolle/Takt an der Vorderseite und eine andere Rolle auf der Rückseite gestempelt.

Ist eine Ladeeinheit zusammengestellt, so wird diese vom Taktschlitten auf einen Verschiebewagen 522 mit Kippvorrichtung und Fänger gekippt. Dieser verfährt in Pfeilrichtung Z bis zur Transportwagen-Förderstrecke und übergibt die Rolle auf das Transportwagen-Ladeprofil und -hubstation, das bei 523 angedeutet ist. Hier fährt der Transportwagen unter die Rolle, nimmt diese mit seiner Hubeinrichtung auf und fährt auf der oberen Fahrschiene 501 zu dem vorgegebenen Ziel (Fig.12).

Die Rollenschneidvorrichtungen 520,520' haben die gleiche Einrichtung. In der Förderstrecke zu der Rollenschneidvorrichung 520' ist ein Drehtisch 540 vorgesehen, der den Winkelausgleich von ca. 6° zwischen Papierfabrik und Ausrüstung/Hochregallager ausgleicht und auch gleichzeitig für die spätere Anbindung der Förderstrecke von weiteren Rollenschneidvorrichtungen vorgesehen ist (Fig.9).

Die von den Rollenschneidvorrichtungen 520,520' kommenden Papierrollen werden über einen Ausstoßer 560, über die Ablaufbahn 561 mit Stopper und Anrollhilfen in eine Hubstation 562, in der ein Transportwagen 510 steht, gerollt. Von dieser Station kann die Rolle entweder über die Kippvorrichtung auf die weiterführende Ablaufbahn in die als Fänger ausgebildeten Fahrprofile vor dem Vertikalförderer 563 gekippt werden oder mit Hilfe der Hydraulik in dem Transportwagen angehoben werden.

Der Transportwagen verfährt in den doppelstöckigen Fahrprofilen (Fig.12) auf der oberen Ebene E1 vor die Ablaufbahn 564. Hier wird die Rolle mit dem Ausstoßer 565 über die Ablaufbahn mit Stopper in die als Fänger ausgebildeten Fahrprofile vor dem Vertikalförderer 569 übergeben. Der Transportwagen wird nun in der Hubstation auf die untere Fahrprofilebene gehoben und fährt zurück zu der Hubstation 562; hier wird er wieder mit der Hubstation auf die obere Ebene angehoben und kann von neuem Rollen übernehmen. In diesem Kreislauf befinden sich zwei Transportwagen (Fig.9).

Die Plattform des Vertikatförderers 563 führt vor das verlängerte Fahrprofil der Ablaufbahn. Der auf der Plattform befindliche Transportwagen fährt aus und unter die Rolle, hebt seine Plattform an und übernimmt somit die Rolle; dann fährt er zurück zum Vertikalförderer, der jetzt in die vom Rechner vorgegebene Ebene fährt. Der Transportwagen nimmt die Rolle wieder auf, fährt in das Fahrprofil 566 ein und setzt die Papierrolle auf das Profil ab. Dieses Fahr- und Auflagerprofil dient als Stauplatz. Der Transportwagen fährt zurück in den Vertikalförderer und übernimmt in der Einlagerungsebene die nächste Rolle.

Die gleichen Funktionen können auch mit der Ablaufbahn 564, dem Vertikalförderer 569 mit dem Transportwagen und dem Stauplatz 567 gefahren werden.

Der Verschiebewagen 50 mit dem Papierrollentransportwagen 70 fährt nun vor den Stauplatz, der Papierrollentransportwagen fährt unter die Rolle, hebt sie an und fährt zurück auf den Verschiebewagen; hier wird die Rolle auf das Fahr- und Auflagerprofil des Verschiebewagens während des Verfahrens abgesetzt. Der Verschiebewagen fährt nun vor den vom Rechner vorgegebenen Kanal, der Papierrollentransportwagen nimmt die Rolle wieder auf und fährt in den Lagerkanal ein. Hier setzt er die Rolle auf den vom Rechner vorgegebenen Platz ab und fährt dann auf den Verschiebewagen zurück.

Das Auslagern von Papierrollen erfolgt in der Weise, daß der Verschiebewagen 50 mit dem Papierrollentransportwagen 70 vor den vom Rechner vorgegebenen Regalkanal fährt; der Papierrollentransportwagen 70 fährt in die Gasse ein, hebt seine Plattform nach Erreichen des Lagerplatzes an und übernimmt so die Papierrolle, fährt zurück zum Verschiebewagen und setzt die Rolle auf die Auflagerprofile des Verschiebewagens ab. Der Verschiebewagen verfährt auf Schienen zu einem Stauplatz 670 vor den Vertikalförderer 60. Der Papierrollentransportwagen hebt die Rolle an, fährt in das Fahr- und Auflagerprofil ein, setzt die Rolle ab und fährt zurück auf den Verschiebewagen. Dieser fährt nun zum nächsten Regalkanal oder zu einem Vertikalförderer der Einlagerung, um eine neue Rolle aufzunehmen.

Der Vertikalförderer 60 fährt nun in die gleiche Ebene, der Transportwagen 70 des Vertikalförderers fährt in das Profil ein, hebt die Rolle an und fährt zurück in den Vertikalförderer. Dieser fährt nun in die Auslagerungsebene, dort fährt der Transportwagen 500 mit der Rolle in das Fahrprofil 671 ein und setzt die Rolle ab. In diesem Fahrprofil bewegt sich ein Transportwagen 500, der die Rolle nun übernimmt, in das Fahr- und Auflagerprofil des Drehtisches 540 einfährt und dort absetzt. Der Transportwagen 500 fährt zurück in das Fahrprofil.

Das Umlagern von Papierrollen innerhalb einer Ebene ist mit Hilfe der Verschiebewagen 50 und der Papierrollentransportwagen 70 möglich.

**Patentansprüche**

1. Hochregallager zum Ein- und Auslagern von rollenförmigem Gut, insbesondere von Papierrollen, die liegend von einer Rollenpackvorrichtung über eine Förderstrecke dem Hochregallager mit in mehreren Etagen ausgebildeten Regalfächern zuführbar sind, mit paarweise angeordneten Schienen zur Aufnahme von Papierrollentransportfahrzeugen, wobei jede Schiene des auf Querträgern der Rahmenkonstruktion des Lagers befestigten Schienenpaares ein etwa U-förmiges Querschnittsprofil mit einem Untergurt und einem Obergurt und mit einem den Untergurt mit dem Obergurt verbindenden Steg, aufweist, dadurch gekennzeichnet, daß

a) das Hochregallager (10) aus einem Regalteil (20) oder aus zwei unter Ausbildung eines Verteilerschachtes (30) in einem Abstand voneinander angeordneten Regalteilen (20,120) mit einer Anzahl von in Etagen (21,22,23,24,25) neben- und übereinander angeordneten Regalfächern (26,126) mit stirnseitigen bzw. im Bereich des Verteilerschachtes (30) liegenden, stirnseitigen Öffnungen (26a) und mit einer der Länge oder dem Mehrfachen der Länge einer Papierrolle (100) entsprechenden Länge besteht, wobei die einzelnen Etagen (21 bis 25) eines jeden Regalteiles (20;120) der beiden zu beiden Seiten des Verteilerschachtes (30) angeordneten Regalteile (20;120) den Etagen des jeweils anderen Regalteiles gegenüberliegend sind,

b) in jeder Etage (21;22;23;24;25) eines jeden Regalteiles (20;120) im Bereich der stirnseitigen Öffnungen (26a) eines jeden Regalfaches (26,126) eine waagerechte, quer zur Regallängsrichtung verlaufende Transportbahn (40;41,42;43) für Verschiebewagen (50) angeordnet ist, wobei alle Transportbahnen (40 bis 43) einendseitig in einen oder beidendseitig (40a,41a,42a,43a;40b,41b,42b,43b) in je einen Aufzug (60;160) aus einem Aufzugsschacht (60',160') aus einer Rahmenkonstruktion mit einer heb- und senkbaren Transportplattform (61;161) zur Aufnahme mindestens eines Verschiebewagens (50) mit einem auf diesem anordbaren Papierrollentransportwagen (70) münden,

c) die Transportbahnen (40 bis 43) und die Transportplattform (61;161) eines jeden Aufzuges (60;160) Laufschienen (45,46;62,162) für die Verschiebewagen (50) bzw. deren Papierrollentransportwagen (70) aufweisen, wobei die Laufschienen (62,162) einer jeden Transportplattform (61;161) mit den Laufschienen (45,46) einer jeden Transportbahn (40;41;42;43) in der jeweiligen Etagenstellung der Transportplattformen (61,161) einen stufenlosen Verschiebewagenüberfahrbereich ausbildend sind,

d) jeder Verschiebewagen (50) mit einem quer zur Verschiebewagenvorschubbewegung verlaufenden Papierrollentransportwagen (70) versehen ist, der auf in dem Verschiebewagen (50) vorgesehenen Laufschienen (52) verfahrbar ist und der mit einer heb- und senkbaren Papierrollentragplatte (71) mit einer etwa teilkreisbogenförmigen Papierrollenauflagefläche (72) versehen ist,

e) jedes Regalfach (26;126) mit einem in Regalfachlängsrichtung verlaufenden, feststehend angeordneten Papierrollenträger (80) und mit zu dessen beiden Seiten angeordneten Laufbahnen (82,82') für den Papierrollentransportwagen (70) versehen ist, wobei der Papierrollenträger (80) aus zwei im Abstand voneinander angeordneten Schienen (83,84) besteht, deren Abstützflächen (83a,84a) derart zueinander geneigt verlaufend ausgebildet sind, daß eine dem Teilumfang einer Papierrolle entsprechende Lagerfläche ausgebildet ist und deren Abstand voneinander derart bemessen ist, daß der Papierrollentransportwagen (70) mit angehobener Papierrollentragplatte (71) zwischen den Schienen (83,84) hindurchfahrbar ist,

f) die Antriebseinrichtungen (65,165;55;75) für das Verfahren der Transportplattformen (61,161) der Aufzüge (60,160), der Verschiebewagen (50) und der Papierrollentransportwagen (70) in einem Programmsteuerwerk (200) zusammengefaßt sind, in das auch die einzelnen Regalfächer (26,126) eingespeichert sind,

g) der Steg (182) jeder Schiene (83;84) ungeknickt geradlinig verlaufend und über Schraub-, Niet- oder Schweißverbindungen (183) mit einer Anzahl von in Abständen voneinander angeordneten und mit dem Querträger (12) der Rahmenkonstruktion (4) des Lagers verbundenen senkrechten Tragholmen (184) verbunden ist,

h) der Untergurt (181) von einem Schenkel (187) mit einem waagerecht verlaufenden, das Auflager für den Papierrollentransportwagen (70) bildenden Abschnitt (187a) und einem sich an diesen anschließenden, senkrecht und parallel zu dem Steg (182) verlaufenden Abschnitt (187b) gebildet ist, wobei sich der waagerechte Schenkelabschnitt (187a) auf und der senkrkechte Schenkelabschnitt (187b) sich an einem mit dem senkrechten Tragholm (184) und dem Querträger (12) verbundenen Winkelprofil (188) abstützt, dessen Höhe gegenüber der Länge des senkrechten Schenkelabschnittes (187b) der Schiene (83,84) größer ist,

i) der Obergurt (180) von einem Schenkel (185) gebildet ist, der in Richtung zum Auflager (187') des Untergurts (181) schräg verlaufend ist und an den sich ein senkrecht und parallel zu dem Steg (182) der Schiene (83,84) verlaufender Abschnitt (185a) anschließt, wobei der senkrechte Tragholm (184) eine Länge aufweist, die der Länge aus der Summe der Länge des Steges (182) und des Winkelprofils (187) entspricht oder gegenüber der Gesamtlänge des Steges (182) und des Winkelprofils (187) eine kleinere Länge aufweist.

2. Hochregallager nach Anspruch 1, dadurch gekennzeichnet, daß das Hochregallager (10) mit seinen Transportbahnen (40 bis 43) aus einer auf einer Grundplatte angeordneten Rahmenkonstruktion besteht.

3. Hochregallager nach einem der Ansprüche 1 oder 2, dadurch gekennzeichnet, daß der Verteilerschacht (30) zwischen zwei Regalteilen (20,120) eine Breite aufweist, die der Länge einer Papierrolle (100) entspricht.

4. Hochregallager nach einem der Ansprüche 1 bis 3, dadurch gekennzeichnet, daß jeder Verschiebewagen (50) und jeder auf diesem huckepackartig getragene Papierrollentransportwagen (70) mit einem elektromotorisch betriebenen Fahrmotor versehen ist.

5. Hochregallager nach einem der Ansprüche 1 bis 4, dadurch gekennzeichnet, daß die Papierrollentragplatte (71) eines jeden Papierrollentransportwagens (70) mittels einer hydraulisch oder elektromotorisch betriebenen Einrichtung höhenverfahrbar ist.

6. Hochregallager nach einem der Ansprüche 1 bis 5, dadurch gekennzeichnet, daß der Schenkel (185) des Obergurtes (180) der Schiene (83;84) zu dem Steg (182) eine Winkelstellung von 65° aufweist.

7. Hochregallager nach einem der Ansprüche 1 bis 6, dadurch gekennzeichnet, daß der senkrechte Tragholm (184) der Schiene (83;84) als Doppel-T-Profilträger ausgebildet und mit seinen Flanschen (184a,184b) an dem Steg (182) befestigt ist.

8. Hochregallager nach einem der Ansprüche 1 bis 7, dadurch gekennzeichnet, daß das Winkelprofil (188) der Schiene (83;84) sich über die gesamte Länge des Untergurts (181) erstreckt.

9. Hochregallager nach einem der Ansprüche 1 bis 7, dadurch gekennzeichnet, daß über die Länge des Untergurts (181) der Schiene (83;84) mehrere einzelne, im Abstand voneinander angeordnete Winkelprofilabschnitte vorgesehen sind.

10. Hochregallager nach einem der Ansprüche 1 bis 9, dadurch gekennzeichnet, daß die Befestigung des Steges (182) der Schiene (83;84) im oberen Bereich des Tragholms (184) erfolgt.

11. Hochregallager nach einem der Ansprüche 1 bis 10, dadurch gekennzeichnet, daß die Befestigung des Steges (182) der Schiene (83,84) über die gesamte Länge des Tragholmes (184) erfolgt.

12. Hochregallager nach einem der Ansprüche 1 bis 11, dadurch gekennzeichnet, daß der Aufzugsschacht (60'; 160') feststehend an dem einen Ende der Transportbahnen (40 bis 43) angeordnet ist.

13. Hochregallager nach einem der Ansprüche 1 bis 12, dadurch gekennzeichnet, daß der Aufzugsschacht (60'; 160') seitlich vor dem Verteilerschacht (30) angeordnet ist, wobei die vor den Regalteilen (20;120) verlaufenden Transportbänder (40 bis 43) über quer zu diesen verlaufende Transportbänder (64 bis 49) in den Aufzugsschacht (60';160') geführt sind.

14. Hochregallager nach einem der Ansprüche 1 bis 12, dadurch gekennzeichnet, daß der Aufzugsschacht (60';160') im oder vor dem Verteilerschacht (30) angeordnet ist.

15. Hochregallager nach einem der Ansprüche 1 bis 12, dadurch gekennzeichnet, daß der Aufzugsschacht (60';160') in dem Verteilerschacht 30 ohne in diesem angeordnete Transportbänder (40 bis 43) zwischen den beiden Regalteilen (20;120) parallel zu den Regalteilen (20;120) auf Laufschienen (300,301) verfahrbar angeordnet ist, wobei das Verfahren vermittels elektromotorischer Antriebseinrichtungen (305) erfolgt.

16. Hochregallager nach einem der Ansprüche 1 bis 15, dadurch gekennzeichnet, daß der Aufzugsschacht (60'; 160') selbstfahrend ausgebildet und in dem Verteilerschacht (30) ohne in diesem angeordnete Transportbänder (40 bis 43) parallel zu den Regalteilen (20;120) verfahrbar ist.

17. Hochregallager nach einem der Ansprüche 1 bis 16, dadurch gekennzeichnet, daß dem Hochregallager (10) Zuführbahnen (500) mit auf diesen verfahrenbaren, selbstfahrenden Papierrollentransportwagen (510) vorgeschaltet sind, wobei jede Zuführbahn (500) zweietagig mit übereinanderliegenden Fahrstrecken (511,512) für die Papierrollentransportwagen (510) ausgebildet ist, und daß jede Zuführbahn (500) in einem Aufzugsschacht (60';160') des Hochregallagers (10) mündet, daß gegebenenfalls zur Überbrückung von Höhendifferenzen in der Zuführbahn (500) Vertikalförderer (515) angeordnet sind und daß die Zuführbahn (500) mit Papierrollenschneidvorrichtungen (520), Rollenpackmaschinen (530) und mit Drehtischen (540) zusammenarbeitet.

18. Schiene in paarweiser Anordnung in Lagern, insbesondere Hochregallagern, mit in mehreren Etagen ausgebildeten Regalfächern, zur Aufnahme von rollenförmigem Lagergut, insbesondere Papierrollen und von Papierrollentransportfahrzeugen, wobei jede Schiene des auf Querträgern der Rahmenkonstruktion des Lagers befestigten Schienenpaares ein etwa U-förmiges Querschnittsprofil mit einem Untergurt und einem Obergurt und mit einem den Untergurt mit dem Obergurt verbindenden Steg, aufweist, dadurch gekennzeichnet,daß

a) der Steg (182) der Schiene (83;84) ungeknickt geradlinig verlaufend und über Schraub-, Niet- oder Schweißverbindungen (183) mit einer Anzahl von in Abständen voneinander angeordneten und mit dem Querträger (12) der Rahmenkonstruktion (4) des Lagers verbundenen senkrechten Tragholmen (184) verbunden ist,

b) der Untergurt (181) von einem Schenkel (187) mit einem waagerecht verlaufenden, das Auflager für den Papierrollentransportwagen (70) bildenden Abschnitt (187a) und einem sich an diesen anschließenden, senkrecht und parallel zu dem Steg (182) verlaufenden Abschnitt (187b) gebildet ist, wobei sich der waagerechte Schenkelabschnitt (187a) auf und der senkrechte Schenkelabschnitt (187b) sich an einem mit dem senkrechten Tragholm (184) und dem Querträger (12) verbundenen Winkelprofil (188) abstützt, dessen Höhe gegenüber der Länge des senkrechten Schenkelabschnittes (187b) der Schiene (83,84) größer ist,

c) der Obergurt (180) von einem Schenkel (185) gebildet ist, der in Richtung zum Auflager (187') des Untergurts (181) schräg verlaufend ist und an den sich ein senkrecht und parallel zu dem Steg (182) der Schiene (83,84) verlaufender Abschnitt (185a) anschließt, wobei der senkrechte Tragholm (184) eine Länge aufweist, die der Länge aus der Summe der Länge des Steges (182) und des Winkelprofils (187) entspricht oder gegenüber der Gesamtlänge des Steges (182) und des Winkelprofils (187) eine kleinere Länge aufweist.

19. Schiene nach Anspruch 18, dadurch gekennzeichnet, daß der Schenkel (185) des Obergurtes (180) zu dem Steg (182) eine Winkelstellung von 65° aufweist.

20. Schiene nach einem der Ansprüche 18 und 19, dadurch gekennzeichnet, daß der senkrechte Tragholm (184) als Doppel-T-Profilträger ausgebildet und mit seinen Flanschen (184a,184b) an dem Steg (182) befestigt ist.

21. Schiene nach einem der Ansprüche 18 bis 20, dadurch gekennzeichnet, daß das Winkelprofil (188) sich über die gesamte Länge des Untergurts (181) erstreckt.

22. Schiene nach einem der Ansprüche 18 bis 21, dadurch gekennzekchnet, daß über die Länge des Untergurts (181) mehrere einzelne, im Abstand voneinander angeordnete Winkelprofilabschnitte vorgesehen sind.

23. Schiene nach einem der Ansprüche 18 bis 22, dadurch gekennzeichnet, daß die Befestigung des Steges (182) der Schiene (83;84) im oberen Bereich des Tragholms (184) erfolgt.

24. Schiene nach einem der Ansprüche 18 bis 23, dadurch gekennzeichnet, daß die Befestigung des Steges (182) der Schiene (83,84) über die gesamte Länge des Tragholmes (184) erfolgt.

Fig.1

Fig. 2

EP 0 518 081 A1

Fig. 3

Fig.4

Fig. 5

## Fig. 6

Fig. 7

Fig. 8

Fig.9

Fig. 10

Fig.11

Fig.12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 396 005 (COPLA FÖRDER-UNDLAGERTECHNIK GESELLSCHAFT FÜR ANLAGENBAU MBH) * Ansprüche 1-5,15; Abbildung 7 * | 1 | B65G1/06 |
| Y | IDEM | 6-24 | |
| | --- | | |
| A | US-A-4 286 911 (BENJAMIN) *figure 1, 23, 24 :ref 292, 294* * Spalte 16, Zeile 6 - Zeile 64 * | 1 | |
| Y | IDEM | 6-24 | |
| | --- | | |
| A | US-A-4 971 508 (MIYAHARA ET AL) * Spalte 4, Zeile 4 - Zeile 53 * * Abbildungen 3,5,7 * | 1,18 | |
| | --- | | |
| A | WO-A-8 904 284 (KONE OY) * Zusammenfassung * | | |
| | ----- | | |

RECHERCHIERTE SACHGEBIETE (Int. Cl.5 )

B65G

Der vorliegende Recherchenbericht wurde für alle Patentansprüche erstellt

| Recherchenort | Abschlußdatum der Recherche | Prüfer |
|---|---|---|
| DEN HAAG | 15 SEPTEMBER 1992 | BEERNAERT J.E. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
    Dokument

EPO FORM 1503 03.82 (P0403)